(19)

Europäisches
Patentamt
European
Patent Office
Office européen
des brevets

(11)  **EP 2 567 750 B1**

(12)  **EUROPEAN PATENT SPECIFICATION**

(45) Date of publication and mention
of the grant of the patent:
**24.12.2014  Bulletin 2014/52**

(51) Int Cl.:
***B01D 71/68*** *(2006.01)*  ***B01D 67/00*** *(2006.01)*
***B01D 69/08*** *(2006.01)*

(21) Application number: **11180543.8**

(22) Date of filing: **08.09.2011**

(54) **Hollow fiber membrane**

Hohlfasermembran

Membrane en fibre creuse

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2013  Bulletin 2013/11**

(73) Proprietor: **Gambro Lundia AB
220 10 Lund (SE)**

(72) Inventors:
• **Krause, Bernd
72414 Rangendingen (DE)**

• **Zweigart, Carina
72355 Schoemberg (DE)**
• **Hornung, Markus
72147 Nehren (DE)**
• **Menda, Ralf
72411 Bodelshausen (DE)**

(74) Representative: **Perchenek, Nils
Gambro Dialysatoren GmbH
Legal and Intellectual Property
Holger Crafoord-Strasse 26
72379 Hechingen (DE)**

(56) References cited:
**EP-A1- 2 365 022    US-A- 6 113 785**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a semipermeable asymmetric hollow fiber membrane, the membrane material being a graft copolymer of at least one hydrophobic polymer and at least one hydrophilic polymer. The invention also relates to processes for the preparation of said membranes, devices comprising said membranes, and the use of said membranes in hemodialysis, hemodiafiltration or hemofiltration of blood as well as in bioprocessing, plasma fractionation and the preparation of protein solutions.

### Background of the invention

EP 0 305 787 A1 discloses a permselective asymmetric membrane suitable for hemodialysis, hemodiafiltration and hemofiltration of blood, comprised of a hydrophobic first polymer, e.g. polyamide, a hydrophilic second polymer, e.g. polyvinylpyrrolidone, and suitable additives. The membrane has a three-layer structure, comprising a first layer in the form of dense, rather thin skin, responsible for the sieving properties, a second layer in the form of a sponge structure, having a high diffusive permeability and serving as a support for said first layer, and a third layer in the form of a finger structure, giving the membrane mechanical stability.

EP 2 113 298 A1 discloses a semipermeable asymmetric hollow fiber membrane based on polyethersulfone or polysulfone and a blend of low and high molecular weight PVP. The membrane is suitable for hemodialysis, hemofiltration or hemodiafiltration. The membrane is further characterized by a four-layer structure. The inner layer of the four-layer structure, i.e. the blood contacting layer and the inner surface of the hollow filtration membrane, is a separation layer in the form of a dense layer having a thickness of less than 1 $\mu$m and a pore size in the nano-scale range. The next layer in the hollow fiber membrane has the form of a sponge structure. The third layer has the form of a finger structure. The fourth layer is the outer layer with the outer surface. The membrane has a wall thickness of between 20 and 60 $\mu$m.

US 6 113 785 A discloses a polysulfone membrane for purifying blood comprising a polysulfone and a graft copolymer consisting of (A) a hydrophilic segment and (B) a hydrophobic segment, wherein (B) is not polysulfone. The working examples disclose membranes comprising graft copolymers wherein the hydrophilic segments (A) are polyvinylpyrrolidone segments and the hydrophobic segments (B) are polystyrene segments.

EP 2 365 022 A1 discloses graft copolymers of at least one hydrophobic polymer and of at least one hydrophilic polymer formed by reactive blending of the at least one hydrophobic polymer and of the at least one hydrophilic polymer. In one embodiment, the copolymer is prepared by reactive blending in an extruder at a temperature in the range of from 280 to 350°C. The use of the graft copolymer for the production of porous flat sheet membranes and hollow fiber membranes also is taught.

It has now been found that membranes with excellent performance can be obtained from graft copolymers.

### Summary of the Invention

The present invention provides membranes made of novel graft copolymers, in particular semipermeable asymmetric hollow fiber membranes suitable for, e.g., hemodialysis, hemodiafiltration or hemofiltration of blood, as well as in bioprocessing, plasma fractionation and the preparation of protein solutions.

According to one aspect of the invention, a semipermeable asymmetric hollow fiber membrane having a wall thickness in the range of from 5 to 150 $\mu$m and made of a graft copolymer of at least one polysulfone or polyethersulfone and at least one polyvinylpyrrolidone is provided.

According to a further aspect, the invention relates to a process for preparing the semipermeable asymmetric membrane of the invention.

According to another aspect, the invention relates to a device comprising the semipermeable asymmetric membrane of the invention.

### Brief Description of the Figures

Figure 1 shows scanning electron micrographs (SEM) of a hollow fiber membrane produced according to Example 3.

Figure 2 shows scanning electron micrographs (SEM) of a hollow fiber membrane produced according to Example 4.

Figure 3 shows scanning electron micrographs (SEM) of a hollow fiber membrane produced according to Example 5.

Figure 4 shows scanning electron micrographs (SEM) of a hollow fiber membrane produced according to Example 7.

Figure 5 shows scanning electron micrographs (SEM) of a hollow fiber membrane produced according to Example 8.

Figure 6 shows scanning electron micrographs (SEM) of a hollow fiber membrane produced according to Example 9.

Figure 7 shows scanning electron micrographs (SEM) of a hollow fiber membrane produced according to Example 10.

Figure 8 shows scanning electron micrographs (SEM) of a hollow fiber membrane produced according to Example 11.

**Detailed Description**

The semipermeable asymmetric membrane of the invention is made of a graft copolymer of at least one polysulfone or polyethersulfone and at least one polyvinylpyrrolidone.

In one embodiment, the graft polymer comprises 50 to 99 wt%, for instance 90 to 99 wt%, or 95 to 99 wt%, based on the total weight of the graft copolymer, of the at least one polysulfone or polyethersulfone, and 1 to 50 wt%, for instance, 1 to 10 wt%, or 1 to 5 wt%, based on the total weight of the graft copolymer, of the at least one polyvinylpyrrolidone.

In one embodiment of the invention, a polysulfone having a weight average molecular weight of from 40,000 to 100,000 g/mol, for instance, 70,000 to 85,000 g/mol, is used as a starting material. Examples of suitable polysulfones are available from Solvay S.A., under the trade name Udel® P-1700 NT LCD, Udel® P-1800, Udel® P-3500 NT LCD, and Udel® P-1835, or from BASF S.E., under the trade name Ultrason® S 6010.

In one embodiment of the invention, a polyethersulfone having a weight average molecular weight of from 30,000 to 80,000 g/mol, for instance, from 40,000 to 60,000 g/mol, is used as a starting material. Examples of suitable polyethersulfones are available from BASF S.E., under the trade name Ultrason® E 6020 P, or from Solvay S.A., under the trade name Gafone® 3000P, Gafone® 3100P and Gafone® 3200P.

In one embodiment of the invention, a polyvinylpyrrolidone having a number average molecular weight of from 10,000 to 500,000 g/mol and a weight average molecular weight of from 40,000 to 2,500,000 g/mol is used as a starting material. Examples include a polyvinylpyrrolidone having a number average molecular weight of from 10,000 to 20,000 g/mol and a weight average molecular weight of 40,000 to 60,000 g/mol, a polyvinylpyrrolidone having a number average molecular weight of from 150,000 to 500,000 g/mol and a weight average molecular weight of 700,000 to 2,500,000 g/mol, a polyvinylpyrrolidone having a number average molecular weight of from 200,000 to 400,000 g/mol and a weight average molecular weight of 900,000 to 2,000,000 g/mol, and a polyvinylpyrrolidone having a number average molecular weight of from 200,000 to 300,000 g/mol and a weight average molecular weight of 900,000 to 1,200,000 g/mol. In another embodiment, a mixture of a polyvinylpyrrolidone having a molecular weight of less than 100,000 g/mol and a polyvinylpyrrolidone of at least 100,000 g/mol is used as a starting material. Examples of suitable polyvinylpyrrolidones are available from BASF S.E., under the trade name Luvitec®. An example of a suitable polyvinylpyrrolidone having a molecular weight of less than 100,000 g/mol is available under the trade name Luvitec® K30. Examples of suitable polyvinylpyrrolidones having a molecular weight of at least 100,000 g/mol are available under the trade name Luvitec® K85 or Luvitec® K90, respectively.

The graft copolymer is formed by reactive blending of at least one polysulfone or polyethersulfone and at least one polyvinylpyrrolidone in an extruder, e.g. a co-rotating twin screw extruder having three to five mixing zones and a ratio L/D (length to diameter) in the range of from 20 to 45, e.g., from 32 to 40.

In one embodiment, the weight ratio of the at least polysulfone and/or polyethersulfone to the at least one polyvinylpyrrolidone in the reaction mixture fed to the extruder is in the range of from 50:50 to 95:5, for instance, from 70:30 to 90:10.

In one embodiment, the reaction mixture does not contain a polymerization initiator. In one embodiment, reactive blending is performed in the presence of air. In one embodiment of the process, air or oxygen is introduced into the extruder during reactive blending.

In another embodiment, a polymerization initiator is added to the reaction mixture. Examples of suitable initiators are 2,3-dimethyl-2,3-diphenyl butane, 3,4-dimethyl-3,4-diphenyl butane, tert.-butyl hydro peroxide, or polycumene. The concentration of the polymerization initiator generally is in the range of from 0.08 to 5 wt% of the total weight of the reaction mixture, for instance from 0.15 to 0.5 wt%, relative to the total weight of the reaction mixture.

The temperature in the mixing zones of the extruder is in the range of from 280 to 350°C, or from 300°C to 320°C.

In one embodiment, the dwell time of the reaction mixture in the extruder is in the range of from 5 to 10 minutes, for instance, from 6 to 8 min.

The reaction mixture leaving the extruder is solidified and subsequently can be further processed. In one embodiment, the strand of extrudate leaving the extruder is conducted through a cooling bath to solidify the polymer. In one embodiment, the cooling bath contains water.

The strand of extrudate can be cut or granulated to produce beads or granules. In one embodiment, the beads or granules formed are subsequently dried.

In one embodiment, the product obtained by the reactive blending is used without further purification. For instance, the extrudate can be dissolved in a suitable solvent to produce a polymer solution. Examples of suitable solvents include dichloromethane, N-methylpyrrolidone (NMP), dimethylacetamide (DMAC), dimethylformamide (DMF) and dimethylsulfoxide (DMSO). In one embodiment, NMP is used to dissolve the extrudate.

In another embodiment of the invention, the product obtained by the reactive blending process is further processed to remove unreacted starting materials and by-products. In one embodiment, the extrudate is dissolved in a solvent and subsequently precipitated by addition of a precipitation medium. Examples of suitable solvents include dichloromethane, N-methylpyrrolidone (NMP) and dimethylacetamide (DMAC). Examples of suitable precipitation media include water and alcohols like methanol or ethanol. In one embodiment, residual amounts of soluble polyvinylpyrrolidone are removed from the precipitate by extraction. Examples of suitable extraction media include methanol, ethanol, tetrahydrofurane, and supercritical carbon dioxide. In one embodiment, the precipitate is extracted with methanol. In one embodiment, the precipitate is subsequently dried to remove volatiles.

Before formation of a membrane, the graft copolymer is dissolved in a suitable solvent. Examples of suitable solvents include dichloromethane, dimethylsulfoxide, N-methylpyrrolidone (NMP), N-ethylpyrrolidone (NEP), N-octylpyrrolidone (NOP), dimethylformamide (DMF), dimethylsulfoxide (DMSO) and dimethylacetamide (DMAC). In one embodiment, the product is dissolved in NMP. In another embodiment, the product is dissolved in DMAC.

In one embodiment of the present invention, a membrane is formed by a solvent phase inversion spinning process, comprising the steps of

a) dissolving the graft copolymer in at least one solvent to form a graft copolymer solution;

b) extruding said graft copolymer solution through an outer ring slit of a nozzle with two concentric openings into a precipitation bath; simultaneously

c) extruding a center fluid through the inner opening of the nozzle; and thereafter

d) washing the membrane obtained;

e) drying said membrane and, optionally, sterilizing said membrane.

According to one embodiment of the invention, the copolymer solution contains 10-40 wt%, e.g., 20 to 30 wt% or 25 to 35 wt%, of graft copolymer, and 53-90 wt% of solvent; the center liquid contains 20-60 wt%, e.g., 20 to 50 wt%, of water, 40-80 wt%, e.g. 50 to 80 wt%, of a solvent and 0-5 wt% of an additive; the precipitation bath contains 20-100 wt% of water and 0-80 wt% of a solvent and has a temperature within the range of from 5 to 60°C; and the distance between the discharge outlet of the hollow fiber spinning nozzle and the surface of the precipitation bath (falling height) is within the range of from 0 to 100 cm.

In a further embodiment of the process, the hollow fiber spinning nozzle (die, spinneret) is held at a temperature within the range of from 20 to 70°C, e.g., within the range of from 25 to 55°C, or even from 30 to 45°C.

In another embodiment of the process, the spinning speed ($v_{ab}$) of the hollow fiber membrane is 5-60 m/min, e.g., 15-45 m/min.

In a further embodiment of the process according to the invention, the polymer solution has a dynamic viscosity, measured at 22°C, of from 100 to 20,000 mPa*s (determined according to DIN ISO 1628-1).

The center fluid or bore liquid which is used for preparing the membrane according to the invention comprises at least one of the solvents selected from the group consisting of N-methylpyrrolidone (NMP), N-ethylpyrrolidone, N-octylpyrrolidone, dimethylacetamide (DMAC), dimethylsulfoxide (DMSO), dimethylformamide (DMF), butyrolactone and mixtures of said solvents, and a precipitation medium chosen from the group of water, glycerol and other alcohols.

In certain embodiments, the center fluid additionally comprises a further additive to modify the surface of the membrane in order to further increase the performance of the membrane. In one embodiment of the invention, the amount of the additive in the center fluid is from 0 to 5 wt%, e.g., from 0.1 to 0.5 wt%, based on the total weight of the center fluid.

Examples of suitable additives include hyaluronic acid and zwitterionic polymers as well as copolymers of a vinyl polymerizable monomer having a zwitterion in the molecule and another vinyl polymerizable monomer. Examples of zwitterionic (co)polymers include phosphobetains, sulfobetains, and carboxybetains.

In one embodiment of the process, the polymer solution coming out through the outer slit opening of the spinneret is guided through a spinning shaft with controlled atmosphere. In one embodiment of the process, the spinning shaft is held at a temperature within the range of from 2 to 90°C, e.g., within the range of from 25 to 70°C, or from 30 to 60°C.

In one embodiment, the precipitating fiber is exposed to a humid steam/air mixture comprising a solvent in a content of from 0 to 10 wt%, for instance, from 0 to 5 wt%, or from 0 to 3 wt%, related to the water content. The temperature of the humid steam/air mixture is at least 15°C, preferably at least 30°C, and at most 75°C, e.g. not higher than 62°C. Further, the relative humidity in the humid steam/air mixture is from 60 to 100%.

The effect of the solvent in the temperature-controlled steam atmosphere is to control the speed of precipitation of the fibers. When less solvent is employed, the outer surface will obtain a denser surface, and when more solvent is used, the outer surface will have a more open structure. By controlling the amount of solvent within the temperature-controlled steam atmosphere surrounding the precipitating membrane, the amount and size of the pores on the outer surface of the membrane can be modified and controlled.

After precipitation in the precipitation bath, the membrane is washed in at least one water bath. In one embodiment of the process, at least four water baths are used to wash the membrane.

The membrane is then dried at temperatures in the range of from 150 to 280°C, e.g. in the range of from 180 to 260°C. Such drying will provide for an adequate evaporation of water and a defined shrinkage of pores. The membrane can be dried discontinuously or continuously, the latter also being called "online-drying". In the online-drying process, the membrane is continuously fed to a dryer. The drying can be effected by any method known in the art. For instance, the membrane can be dried in a convection oven or by a stream of hot air, e.g. from a nozzle, by contact with a hot surface, or by irradiation, e.g. with infra-red or micro-wave radiation.

The asymmetric hollow fiber membrane according to the present invention has a hydrophilic, spontaneously wettable membrane structure, low fouling properties for long term stable filtration, and low protein adsorption. The asymmetric hollow fiber membrane further has smooth surfaces which avoids or minimizes hemolysis during blood processing. The membrane exhibits high biocompatibility, low or no complement activation and low thrombogenicity.

Generally, the hollow fiber membrane has an inner diameter in the range of from 100 to 700 $\mu$m. In one embodiment, the membrane of the present invention has an inner diameter in the range of from 150 to 220 $\mu$m; e.g. for use in haemodialysis. In another embodiment, the membrane of the present invention has an inner diameter in the range of from 300 to 350 $\mu$m; e.g. for use in plasma separation. In still another embodiment, the membrane of the present invention has an inner diameter in the range of from 100 to 150 $\mu$m; e.g. for membranes having the selective layer on the outside. In still another embodiment, the membrane of the present invention has an inner diameter in the range of from 300 to 700 $\mu$m and a wall thickness in the range of from 60 to 100 $\mu$m, e.g. for bioprocessing membranes.

The hollow fiber membrane has a wall thickness in the range of from 5 to 150 $\mu$m, for instance from 5 to 50 $\mu$m, from 5 to 25 $\mu$m, or from 5 to 18 $\mu$m.

In one embodiment of the invention, the membrane of the invention is a hollow fiber membrane having a three-layer structure.

The first layer of the three-layer structure, i.e. the blood contacting layer and the inner surface of the hollow fiber membrane, is a separation layer in the form of a dense layer. In one embodiment, the layer has a thickness of less than 1 $\mu$m.

The next layer in the hollow fiber membrane has the form of a sponge structure and, in one embodiment of the present invention, a thickness in the range of from 1 to 50 $\mu$m, e.g. 1 to 20, or 1 to 10, or 1 to 5 $\mu$m, and serves as a support for the first layer.

The third layer in this embodiment of the present invention is the outer layer, which is characterized by a homogeneous and open pore structure with a defined surface roughness. In one embodiment, this third layer has a thickness in the range of from 1 to 50 $\mu$m, e.g. 1 to 20, or 1 to 10, or 1 to 5 $\mu$m.

In another embodiment, the membrane of the invention is a hollow fiber membrane having a four-layer structure.

The first layer of the four-layer structure, i.e. the blood contacting layer and the inner surface of the hollow fiber membrane, is a separation layer in the form of a dense layer having, in one embodiment, a thickness of less than 1 $\mu$m and a pore size in the nano-scale range.

The next layer in the hollow fiber membrane has a sponge structure and, in one embodiment of the present invention, a thickness in the range of from 1 to 15 $\mu$m, e.g. 1 to 10, or 1 to 5 $\mu$m, and serves as a support for said first layer.

The third layer has the form of a finger structure. It provides for mechanical stability on the one hand; on the other hand it has, through the high void volume, a very low resistance of transport of molecules through the membrane. In one embodiment of the present invention, the third layer has a thickness of from 20 to 60 $\mu$m. In another embodiment, the third layer has a thickness of from 5 to 25, or even 5 to 10 $\mu$m.

The fourth layer in this embodiment of the present invention is the outer layer, which is characterized by a homogeneous and open pore structure with a defined surface roughness. In one embodiment, this fourth layer has a thickness in the range of from 1 to 10 $\mu$m, or 1 to 5 $\mu$m.

In one embodiment, the openings of the pores are in the size range of from 0.5 to 3 $\mu$m, further the number of pores on the outer surface is in the range of from 10,000 to 150,000 pores per mm$^2$, for example in the range of from 18,000 to 100,000 pores per mm$^2$, or even in the range of from 20,000 to 100,000 pores per mm$^2$.

In one embodiment of the invention, the selective layer, i.e. the layer with the narrowest average pore size, is the inner surface of the hollow fiber membrane.

In a further embodiment of the invention, the selective layer is the outer surface of the hollow fiber membrane. In one embodiment, the membrane has a three- or four-layer structure as described before, but with reversed sequence of the layers. Membranes having the outer surface as selective layer are disclosed in EP 2 228 126 A1, incorporated herein by reference. In one embodiment, the membranes of the invention have a layer structure similar to one of the structures described in EP 2 228 126 A1.

In one embodiment, the membrane is a nanofiltration membrane and the selective separation layer has a number average pore diameter in the range of from 1 to less than 10 nm.

In another embodiment, the membrane is a ultrafiltration membrane and the selective separation layer has a number average pore diameter in the range of from 0.01 to less than 0.1 $\mu$m.

In a further embodiment, the membrane is a microfiltration membrane and the selective separation layer has a number average pore diameter in the range of from 0.1 to 0.5 $\mu$m.

In yet a further embodiment, the membrane is a plasma separation membrane and the selective separation layer has a number average pore diameter of more than 0.5 $\mu$m.

The copolymer of the present invention has the advantage that it enables the formation of membranes with smaller wall thicknesses or higher mechanical stability, respectively, than the membranes produced starting from blends of polyethersulfone or polysulfone and polyvinylpyrrolidone.

A further advantage of the copolymer is the reduced leaching of polyvinylpyrrolidone from the membrane during the washing step after formation of the membrane than in the respective step starting from a polymer blend. Hence, less polyvinylpyrrolidone has to be employed for membrane formation, and less polyvinylpyrrolidone is lost in the washing step, respectively.

Another aspect of the invention is a diffusion and/or filtration device comprising the membrane of the invention. Examples of such devices are dialyzers, hemofilters, ultrafilters and plasmafilters. Such devices generally consist of a casing comprising a tubular section with end caps capping the mouths of the tubular section. A bundle of hollow fiber membranes is usually arranged in the casing in a way that a seal is provided between the first flow space formed by the fiber cavities and a second flow space surrounding the membranes on the outside. Examples of such devices are disclosed in EP 0 844 015 A2, EP 0 305 687 A1, and WO 01/60477 A2, all incorporated herein by reference.

In one embodiment, the separation material of the invention is used in plasmapheresis. In a further embodiment of the invention, the separation material is used in hemodialysis, hemodiafiltration or hemofiltration applications. The separation material of the invention can be used for these purposes instead of conventional membranes, but in a similar manner. The person skilled in the art will easily derive the necessary *modus operandi*.

Another aspect of the invention is the use of the membrane of the invention in bioprocessing, plasma fractionation and the preparation of protein solutions. The membrane of the invention can be used for these purposes instead of membranes conventionally used for these purposes. The person skilled in the art will easily derive a suitable *modus operandi* for the intended application.

It will be understood that the features mentioned above and those described hereinafter can be used not only in the combination specified but also in other combinations or on their own, without departing from the scope of the present invention.

The present invention will now be described in more detail in the examples below. The examples are not intended to limit the scope of the present invention, but are merely an illustration of particular embodiments of the invention.

**<u>Analytical Methods</u>**

**i) Determination of PVP content of graft copolymers**

For the determination of the PVP content of the graft copolymers, the extrudate was dissolved in NMP to produce a 10% (w/w) solution and precipitated from the solution by the addition of methanol. The precipitate was transferred to a Soxhlet extractor, extracted with methanol for 65 hrs to remove any residual PVP not chemically bound in the graft copolymer, and subsequently dried.

Polysulfone/polyvinylpyrrolidone copolymers were dissolved in CDCl$_3$. $^1$H-NMR spectra were recorded and PVP content was calculated from the integrals of the signal at 3.0-3.5 ppm (2H) for polyvinylpyrrolidone, 7.84 ppm (4H) for polysulfone and the molecular weights of the respective repeating units (polysulfone 442.53 g/mol; polyvinylpyrrolidone 111.14 g/mol).

Polyethersulfone/polyvinylpyrrolidone copolymers were dissolved in d$_6$-DMSO. $^1$H-NMR spectra were recorded and PVP content was calculated from the integrals of the signal at 2.85-3.35 ppm (2H) for polyvinylpyrrolidone, 8.0 ppm (4H) for polyethersulfone and the molecular weights of the respective repeating units (polyethersulfone 232.26 g/mol; polyvinylpyrrolidone 111.14 g/mol).

**ii) Membrane bundle preparation**

[A] Preparation of hand bundles:

To prepare membrane bundles for the following performance tests, a bundle of 150 hollow fibers was cut to a defined length of 23 cm. The ends of the fibers were closed by melting. An optical control ensured that all fiber ends were well melted. Then, the ends of the fiber bundle were transferred into a potting cap. The potting cap was fixed mechanically and a potting tube was put over the potting caps. Then the fibers were potted with polyurethane. After the polyurethane had hardened, the potted membrane bundle was cut to open the fibers and stored dry before it was used for the different performance tests.

[B] Preparation of mini-modules:

Mini-modules [= fiber bundles in a housing] were prepared in a similar manner. The mini-modules ensure protection of the fibers and were used for steam-sterilization of the fiber. The manufacturing of the mini-modules differs in the following points:

⇒ The number of fibers required was calculated for an effective surface A of 360 cm$^2$ according to equation (1)

$$A = \pi \times d_i \times l \times n \; [cm^2] \tag{1}$$

with
$d_i$ = inner diameter of fiber [cm]
n = amount of fibers
l = effective fiber length [cm]
⇒ The fiber bundle was cut to a defined length of 20 cm
⇒ The fiber bundle was transferred into a housing before the melting process
⇒ The mini-module was put into a vacuum drying oven over night before the potting process

[C] Preparation of filters:

The filter (= dialyzer) comprises about 8,000 to 10,000 fibers with an effective surface area of 1.4 m$^2$. A filter is characterized by a cylindrical housing with two connectors for the dialyzing fluid and caps applied on both ends, each with one centered blood connector. The manufacturing process (after winding of the fibers) comprises the following main steps:

⇒ the cut bundles (length approx. 30 cm) are transferred into the housing with a special bundle claw;
⇒ both ends of the bundles are closed by a closing process
⇒ the fibers are potted into the housing with polyurethane (PUR);
⇒ the ends are cut to open the fibers;
⇒ the caps are welded to the housing using ultrasonic welding;
⇒ final treatment comprises rinsing, integrity testing, final drying
⇒ the filters are packed in sterile bags and steam sterilized.

**iii) Hydraulic Permeability (Lp) of hand bundles and mini-modules**

The hydraulic permeability of a membrane bundle was determined by pressing a defined volume of water under pressure through the membrane bundle, which had been sealed on one side, and measuring the required time. The hydraulic permeability can be calculated from the determined time, the effective membrane surface area, the applied pressure and the volume of water pressed through the membrane. From the number of fibers, the fiber length and the inner diameter of the fiber, the effective membrane surface area was calculated. The membrane bundle was wetted for thirty minutes before the Lp-test was performed. For this purpose, the membrane bundle was put in a box containing 500 ml of ultrapure water. After 30 minutes, the membrane bundle was transferred into the testing system. The testing system consisted of a water bath that was maintained at 37°C and a device where the membrane bundle was mounted. The membrane bundle was located underneath the water surface of the water bath in the designated device. To avoid that a leakage of the membrane leads to a wrong test result, an integrity test of the membrane bundle and the test system was carried out in advance. The integrity test was performed by pressing air through the membrane bundle that was closed on one side of the bundle. In the test, air bubbles indicate a leakage of the membrane bundle or the test device. If bubbles occur, it has to be checked whether the leakage is due to an incorrect mounting of the membrane bundle in the test device or if a real membrane leakage is present. The membrane bundle was discarded when a leakage of the membrane was detected. The pressure applied in the integrity test has to be at least the same value as the pressure applied during the determination of the hydraulic permeability in order to ensure that no leakage can occur during the measurement of the hydraulic permeability.

**iv) Selectivity / Sieving coefficient (SC) for proteins of hand bundles, mini-modules and filters**

The selectivity of a membrane was determined by sieving coefficient measurements. For this purpose, myoglobin from horse heart (MW = 17.5 kDa) and albumin (MW = 66 kDa), respectively, were dissolved in PBS buffer with a pH of 7.2. The sieving coefficient of the particular protein was obtained as follows: The protein solution was maintained at a temperature of 37°C $\pm$ 1°C and pumped through the testing device (hand bundles, mini-modules or filters) under defined conditions (blood flow ($Q_B$), TMP and filtration rate (UF)). Then, the concentration of the protein in the feed (in), in the retentate (r) and in the filtrate (f) was determined and the sieving coefficient (SC) was calculated according to the following equation (2):

$$SC~[\%] ~=~ 2~*~c(f)~/~[c(in)+c(r)]~*~100\% \tag{2}$$

If the concentration of the protein in the filtrate is zero, a sieving coefficient of 0 % is obtained. If the concentration of the protein in the filtrate equals the concentration of the protein in the feed and the retentate, a sieving coefficient of 100 % is obtained.

Sieving Coefficient in aqueous solution on hand bundles and mini-modules

The Sieving Coefficient experiments in aqueous solution of myoglobin and albumin were performed using two different experimental set-ups with separate solutions. First, the sieving coefficient of myoglobin was determined. Then the sieving coefficient of albumin was determined.

The concentration of myoglobin in the PBS buffer was 100 mg/l. The expiry date of the aqueous solution is between 4 and 8 weeks. The solution has to be stored in the refrigerator. Prior to the Sieving Coefficient experiment, an Lp-test was performed as described above. The sieving coefficient experiment for myoglobin was run in single pass with testing conditions defined as follows:

The intrinsic flow rate ($J_v$ in cm/s) and wall shear rate ($\gamma$ in s$^{-1}$) were fixed whereas the blood flow ($Q_B$) and filtration rate (UF) was calculated using equations (3) and (4), respectively:

$$Q_B~[ml/min]~=~\gamma~*~n~*~\pi~*~di^3~*~60/32 \tag{3}$$

$$UF~[ml/min]~=~J_v~*~A~*~60 \tag{4}$$

with
n = amount of fibers
$d_i$ = inner diameter of fiber [cm]
$\gamma$ = shear rate [s$^{-1}$]
A = effective membrane surface [cm$^2$]
wherein A is calculated according to equation (1).

When testing a hand bundle or a mini-module, the shear rate was set to 500 s$^{-1}$ and the intrinsic flow rate was determined to be 0.38*10$^{-04}$ cm/s.

The first samples were taken after 15 minutes (pool, retentate, and filtrate) and a second time after 60 min. At the end, the test-bundle was rinsed for some minutes with PBS-buffer, and then the test was stopped.

Subsequently, the SC-test of albumin was performed. 60 g of albumin were dissolved in PBS-buffer and the experiment was run re-circulating, the albumin solution being slowly stirred by a magnetic bar stirrer. In the test set-up, the $Q_B$ was calculated according to equation (3), a fixed TMP of 400 mmHg was set and the UF as well as the retentate flow was a result of the test conditions and the membrane permeability properties. After 15 minutes, the flow was switched to single-pass and samples (pool, retentate, filtrate) were taken. After the SC-test the test-bundle was rinsed once more with PBS-buffer and used to perform a second Lp-test in order to get an indication of the adsorption capacity of the membrane for the protein.

## Examples

Reactive blending was carried out in a laboratory extruder Theysohn® TSK 20/40D, co-rotating twin-screw, d = 20 mm, L/D = 40, 3 mixing zones (with 5 kneading elements each); throughput 0.3-6 kg/h.

The dynamic viscosity $\eta$ of the polymer solutions was determined according to DIN ISO 1628-1 at a temperature of 22 °C using a capillary viscosimeter (ViscoSystem® AVS 370, Schott-Geräte GmbH, Mainz, Germany).

## Starting materials

- PSU: polysulfone Udel® P-3500 NT LCD, Solvay S.A.;
- PVP-K30: polyvinylpyrrolidone Luvitec® K30, BASF S.E.; $M_n$ = 14 kDa; $M_w$ = 50 kDa;
- DMDPB: 2,3-dimethyl-2,3-diphenyl butane.

The polymers were dried overnight at 80°C before use.

## Example 1

Polymer mixtures were processed using the following conditions:

- Temperature profile of the extruder: inlet 75°C, preheating zone 300°C, processing zones 310°C/310°C, nozzle 320°C;

- Speed of screw 60 rpm;

- Feed rate 500 g/hr.

- Splat cooling of the extrudate in water

- Formation of granulated copolymer

- Desiccation at 80°C for 5 h.

PSU and PVP-K30 were fed to the extruder at a weight ratio of 90:10; with addition of 0.30 wt%, relative to the total weight of polymer, of DMDPB; content of chemically bound PVP in the product was 2.0 wt%.

## Example 2

A solution comprising 15.6 wt% of the graft copolymer obtained in Example 1, 3.0 wt% of water and 81.4 wt% of NMP was prepared by stirring the graft copolymer in the solvent mixture at 60°C overnight. The solution had a dynamic viscosity of 710 mPa*s at 22°C.

## Examples 3-5

The solution of Example 2 was used to produce hollow fiber membranes under different spinning conditions, as summarized in Table 1.

**Table 1:** Spinning parameters for Examples 3-5.

| Example No. | Center | | Falling height | $V_{ab}$ | Temp. | | Dimensions | |
|---|---|---|---|---|---|---|---|---|
| | H₂O | NMP | | | sn | ss | ID | Wth |
| | wt% | wt% | cm | m/min | °C | °C | μm | μm |
| 3 | 56 | 44 | 100 | 45 | 36 | 33 | 188 | 37 |
| 4 | 56 | 44 | 100 | 45 | 39 | 36 | 191 | 37 |
| 5 | 56 | 44 | 100 | 45 | 42 | 39 | 195 | 37 |

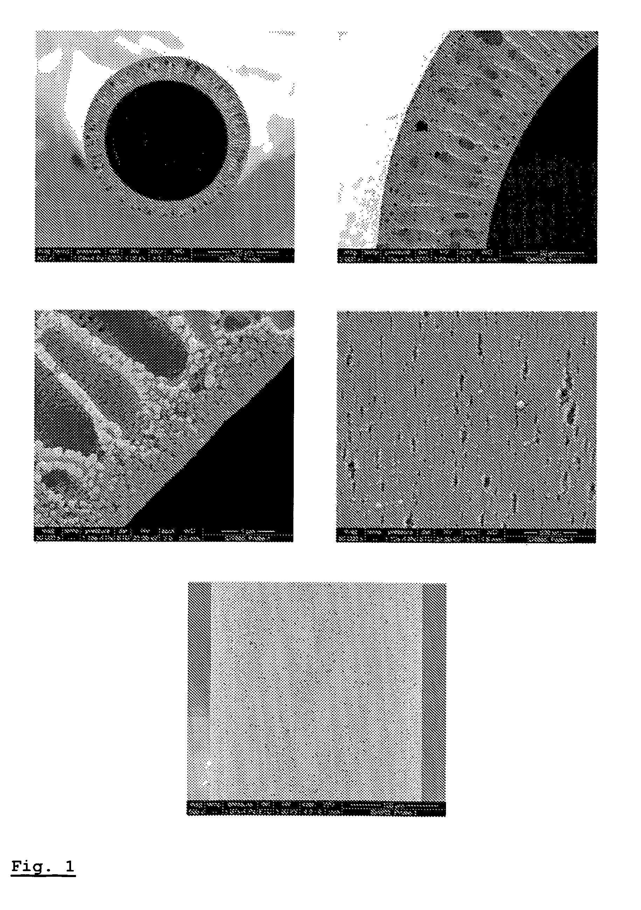

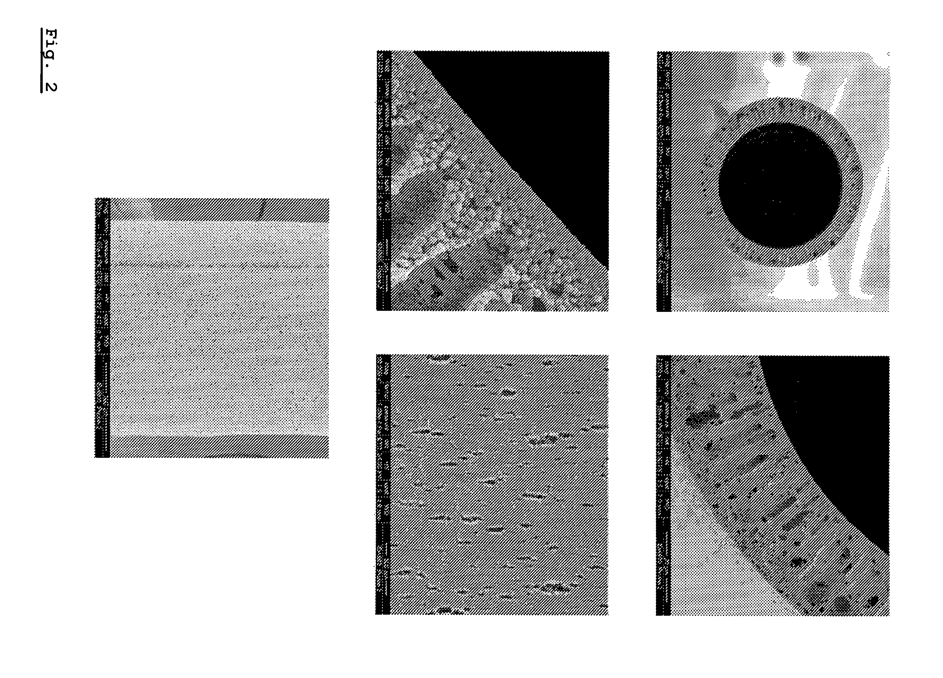

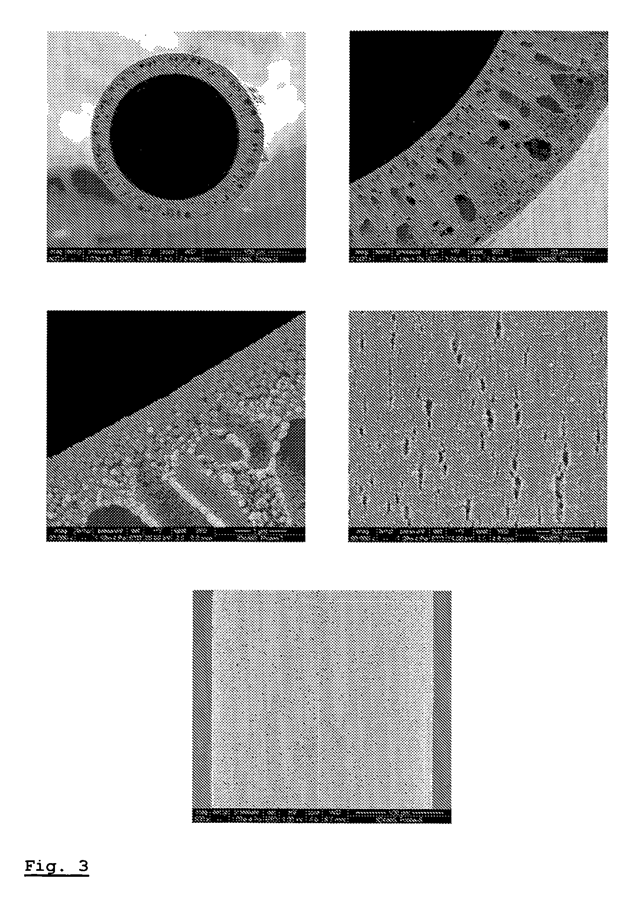

In Examples 3-5, the precipitation bath had a temperature of 18°C. The active separation layer of the membranes was at the inner side. Scanning Electron Micrographs (SEM) of the fibers of Examples 3-5 are shown in Figures 1-3.

The sieving coefficients of myoglobin and albumin in aqueous solution as well as the hydraulic permeability of the membranes obtained in Examples 3-5 were tested on unsterile hand bundles. The results are shown in Table 2.

**Table 2:** Lp value, SC of myoglobin and SC of albumin

| Membrane | Lp [$10^{-4}$*cm/ (bar*s)] | Myoglobin | | Albumin |
|---|---|---|---|---|
| | | 15' | 60' | 15' |
| Example 3 | 40.6 | 46 | 32.2 | 0.34 |
| Example 4 | 88.5 | 67.4 | 74.7 | 1.29 |
| Example 5 | 93.9 | 70.5 | 71.3 | 3.3 |

## Example 6

A solution comprising 25 wt% of the graft copolymer obtained in Example 1 and 75 wt% of NMP was prepared by stirring the graft copolymer in the solvent at 60°C overnight. The solution had a dynamic viscosity of 7,625 mPa*s at 22°C.

## Examples 7-11

The solution of Example 6 was used to produce hollow fiber membranes under different spinning conditions, as summarized in Table 3.

**Table 3:** Spinning parameters for Examples 7-11.

| Example No. | Center | | Falling height | $V_{ab}$ | Temp. | | Dimensions | |
|---|---|---|---|---|---|---|---|---|
| | H₂O | NMP | | | sn | ss | ID | Wth |
| | wt% | wt% | cm | m/min | °C | °C | μm | μm |
| 7 | 46 | 54 | 100 | 40 | 36 | 33 | 187 | 16 |
| 8 | 46 | 54 | 100 | 40 | 40 | 33 | 187 | 14 |
| 9 | 46 | 54 | 100 | 40 | 43 | 33 | 188 | 12 |
| 10 | 43 | 57 | 100 | 40 | 45 | 40 | 190 | 13 |
| 11 | 40 | 60 | 100 | 40 | 45 | 40 | 190 | 12 |

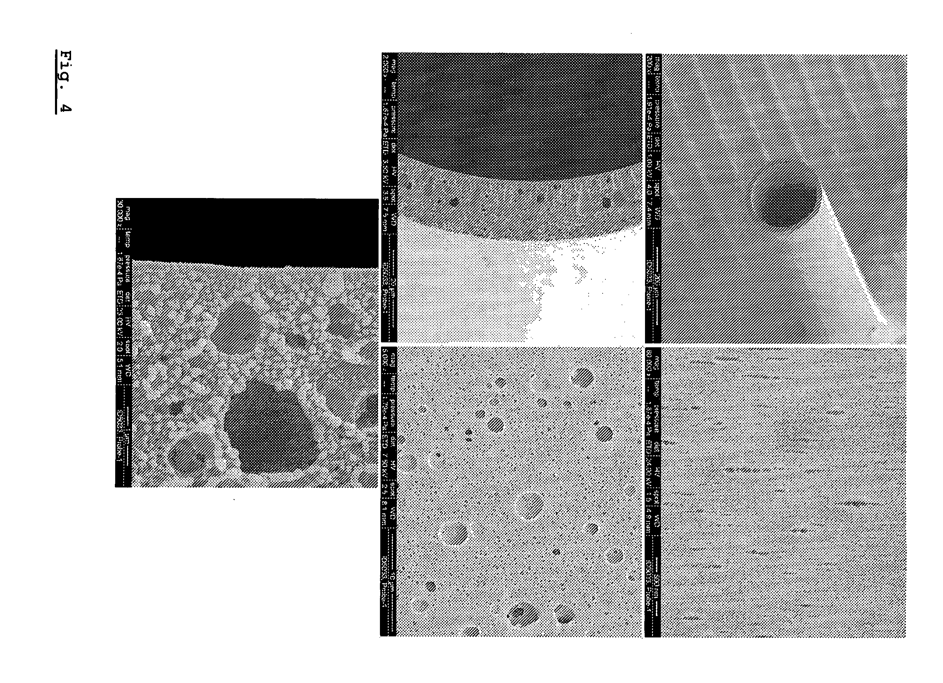

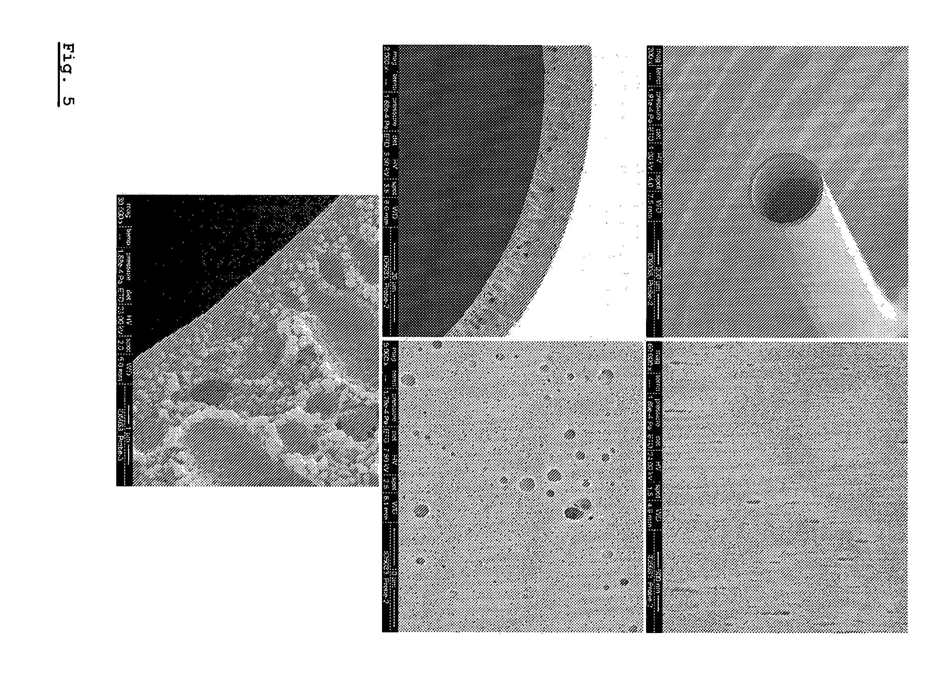

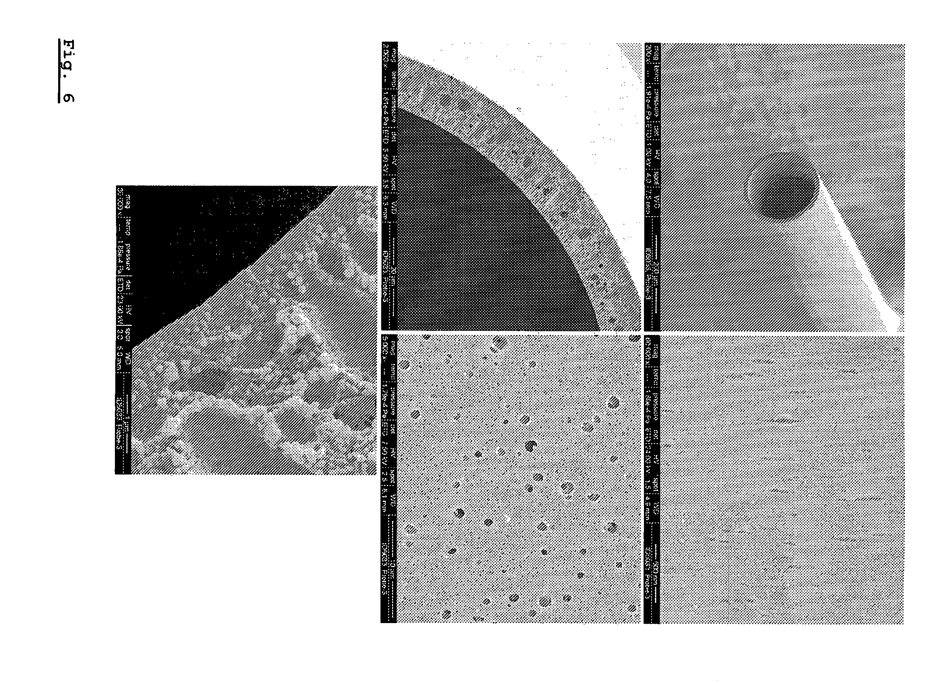

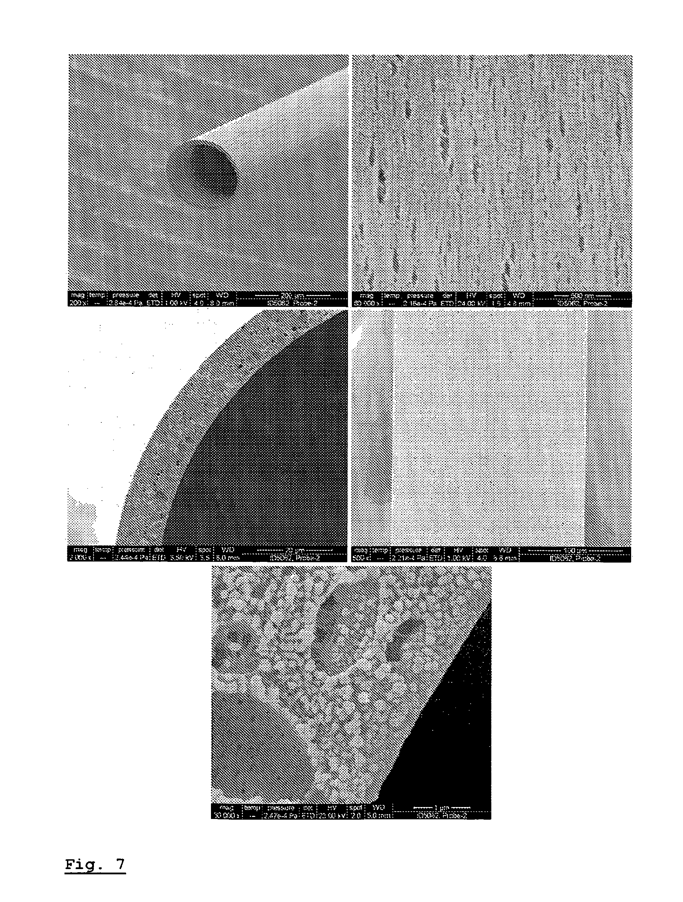

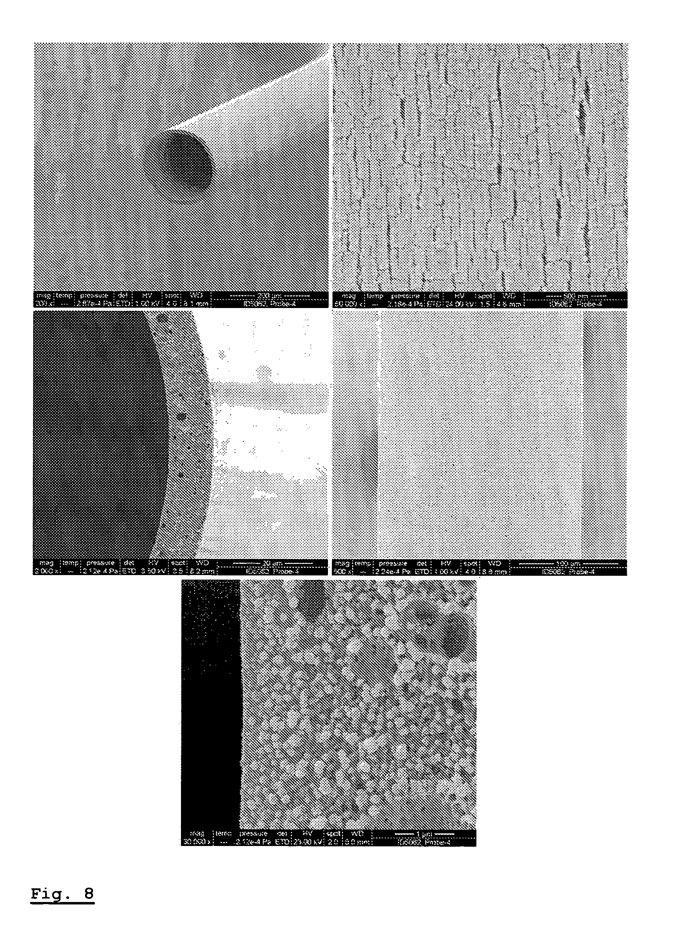

In Examples 7-11, the precipitation bath had a temperature of 24°C. The active separation layer of the membranes was at the inner side. Scanning Electron Micrographs (SEM) of the fibers of Examples 7-11 are shown in Figures 4-8.

The sieving coefficients of myoglobin and albumin in aqueous solution as well as the hydraulic permeability of the membranes obtained in Examples 7-11 were tested on unsterile hand bundles. The results are shown in Table 4.

**Table 4:** Lp value, SC of myoglobin and SC of albumin

| Membrane | Lp [10^{-4}*cm/(bar*s)] | Myoglobin 15' | 60' | Albumin 15' |
|---|---|---|---|---|
| Example 7 | 0.40 | 23.8 | 18.1 | 2.5 |
| Example 8 | 1.13 | 45.2 | 40.5 | 1.6 |
| Example 9 | 2.09 | 45.9 | 29.5 | 1.6 |
| Example 10 | 7.21 | 66.0 | 58.3 | 7.2 |
| Example 11 | 8.60 | 74.3 | 68.4 | 13.8 |

**Claims**

1. A semipermeable asymmetric hollow fiber membrane, **characterized in that** the membrane material is a graft copolymer of at least one polysulfone or polyethersulfone and at least one polyvinylpyrrolidone, wherein the graft copolymer is formed by reactive blending of at least one polysulfone or polyethersulfone and at least one polyvinylpyrrolidone in an extruder at a temperature in the mixing zones of the extruder in the range of from 280°C to 350°C; and wherein the membrane has a wall thickness in the range of from 5 to 150 $\mu$m.

2. The membrane according to claim 1, wherein the graft polymer comprises 50 to 99 wt.%, based on the total weight of the graft copolymer, of the at least one polysulfone or polyethersulfone, and 1 to 50 wt.%, based on the total weight of the graft copolymer, of the at least one polyvinylpyrrolidone.

3. The membrane according to claim 1 or 2, wherein the membrane has a wall thickness in the range of from 5 to 18 $\mu$m.

4. A process for preparing a semipermeable asymmetric hollow fiber membrane, comprising the steps of

   a) dissolving a graft copolymer of at least one polysulfone or polyethersulfone and at least one polyvinylpyrrolidone, formed by reactive blending of at least one polysulfone or polyethersulfone and at least one polyvinylpyrrolidone in an extruder at a temperature in the mixing zones of the extruder in the range of from 280°C to 350°C, in at least one solvent to form a graft copolymer solution;
   b) extruding said graft copolymer solution through an outer ring slit of a nozzle with two concentric openings into a precipitation bath; simultaneously
   c) extruding a center fluid through the inner opening of the nozzle; and thereafter
   d) washing the membrane obtained;
   e) drying said membrane and, optionally, sterilizing said membrane.

5. The process according to claim 4, wherein the graft copolymer comprises 50 to 99 wt.%, based on the total weight of the graft copolymer, of the least one polysulfone or polyethersulfone, and 1 to 50 wt.%, based on the total weight of the graft copolymer, of the least one polyvinylpyrrolidone.

6. The process according to claim 4 or 5, wherein the graft copolymer solution has a dynamic viscosity, measured at 22°C, in the range of from 100 to 20,000 mPa*s, determined according to DIN ISO 1628-1.

7. The process according to any one of claims 4 to 6, wherein the concentration of graft copolymer in the copolymer solution is in the range of from 25 to 35 wt%.

8. The process according to any one of claims 4 to 7, wherein the spinning nozzle is held at a temperature within the range of from 30 to 45°C.

9. The process of any one of claims 4 to 8, wherein the graft copolymer is prepared by reactive blending of at least one polysulfone or polyethersulfone and at least one polyvinylpyrrolidone in a weight ratio of from 50:50 to 95:5 in an extruder at a temperature of from 280 to 350°C.

10. The process of claim 9, wherein the product obtained by the reactive blending process is further processed to remove unreacted starting materials and by-products prior to step a).

11. The process of claim 9, wherein the product obtained by the reactive blending process is used in step a) without further purification.

12. A diffusion and/or filtration device comprising a membrane according to any one of claims 1 to 3.

13. Use of a membrane according to any one of claims 1 to 3, or prepared according to any one of claims 4 to 11, in bioprocessing, plasma fractionation or the preparation of protein solutions.


**Patentansprüche**

1. Semipermeable asymmetrische Hohlfasermembran, **gekennzeichnet dadurch, dass** das Membranmaterial ein Pfropfcopolymer mindestens eines Polysulfons oder Polyethersulfons und mindestens eines Polyvinylpyrrolidons ist, wobei das Pfropfcopolymer gebildet wird durch Reaktivmischen mindestens eines Polysulfons oder Polyethersulfons und mindestens eines Polyvinylpyrrolidons in einem Extruder bei einer Temperatur in den Mischzonen des Extruders im Bereich von 280°C bis 350°C, und wobei die Membrane eine Wandstärke im Bereich von 5 bis 150 $\mu$m aufweist.

2. Membran gemäß Anspruch 1, worin das Pfropfcopolymer 50 bis 99 Gew.%, bezogen auf das Gesamtgewicht des Pfropfcopolymeren, des mindestens einen Polysulfons oder Polyethersulfons und 1 bis 50 Gew.%, bezogen auf das Gesamtgewicht des Pfropfcopolymeren, des mindestens einen Polyvinylpyrrolidons enthält.

3. Membran gemäß Anspruch 1 oder 2, worin die Membran eine Wandstärke im Bereich von 5 bis 18 $\mu$m aufweist.

4. Verfahren zur Herstellung einer semipermeablen asymmetrischen Hohlfasermembran, umfassend die Schritte

   a) Auflösen eines Pfropfcopolymeren mindestens eines Polysulfons oder Polyethersulfons und mindestens eines Polyvinylpyrrolidons, gebildet durch Reaktivmischen mindestens eines Polysulfons oder Polyethersulfons und mindestens eines Polyvinylpyrrolidons in einem Extruder bei einer Temperatur in den Mischzonen des Extruders im Bereich von 280°C bis 350°C, in mindestens einem Lösemittel unter Bildung einer Pfropfcopolymer-Lösung;
   b) Extrudieren der Pfropfcopolymer-Lösung durch einen äußeren Ringspalt einer Düse mit zwei konzentrischen Öffnungen in ein Fällbad; gleichzeitig
   c) Extrudieren einer Zentrumsflüssigkeit durch die innere Öffnung der Düse; und danach
   d) Waschen der erhaltenen Membran;
   e) Trocknen der Membran und gegebenenfalls Sterilisieren der Membran.

5. Verfahren gemäß Anspruch 4, worin das Pfropfcopolymer 50 bis 99 Gew.%, bezogen auf das Gesamtgewicht des Pfropfcopolymeren, des mindestens einen Polysulfons oder Polyethersulfons und 1 bis 50 Gew.%, bezogen auf das Gesamtgewicht des Pfropfcopolymeren, des mindestens einen Polyvinylpyrrolidons enthält.

6. Verfahren gemäß Anspruch 4 oder 5, worin die Pfropfcopolymer-Lösung eine dynamische Viskosität, gemessen bei 22°C, im Bereich von 100 bis 20,000 mPa*s aufweist, bestimmt gemäß DIN ISO 1628-1.

7. Verfahren gemäß einem der Ansprüche 4 bis 6, worin die Konzentration des Pfropfcopolymeren in der Copolymer-Lösung im Bereich von 25 bis 35 Gew.% beträgt.

8. Verfahren gemäß einem der Ansprüche 4 bis 7, worin die Temperatur der Spinndüse im Bereich von 30 bis 45°C gehalten wird.

9. Verfahren gemäß einem der Ansprüche 4 bis 8, worin das Pfropfcopolymer hergestellt wird durch Reaktivmischen mindestens eines Polysulfons oder Polyethersulfons und mindestens eines Polyvinylpyrrolidons in einem Gewichtsverhältnis von 50:50 bis 95:5 in einem Extruder bei einer Temperatur von 280 bis 350°C.

10. Verfahren gemäß Anspruch 9, worin das durch den Reaktivmischprozess erhaltene Produkt weiter behandelt wird, um vor Schritt a) nicht umgesetzte Ausgangsmaterialen und Nebenprodukte zu entfernen.

**11.** Verfahren gemäß Anspruch 9, worin das durch den Reaktivmischprozess erhaltene Produkt ohne weitere Reinigung in Schritt a) verwendet wird.

**12.** Diffusions- und/oder Filtrationsvorrichtung enthaltend eine Membran gemäß einem der Ansprüche 1 bis 3.

**13.** Verwendung einer Membran gemäß einem der Ansprüche 1 bis 3, oder einer gemäß einem der Ansprüche 4 bis 11 hergestellten Membran, in der Bioverfahrenstechnik, der Plasmafraktionierung oder der Herstellung von Proteinlösungen.

**Revendications**

**1.** Membrane à fibres creuses asymétrique semiperméable, **caractérisée en ce que** le matériau de la membrane est un copolymère greffé d'au moins un polysulfone ou polyéthersulfone et d'au moins une polyvinylpyrrolidone, dans laquelle le copolymère greffé est formé par mélange réactif d'au moins un polysulfone ou polyéthersulfone et d'au moins une polyvinylpyrrolidone dans une extrudeuse à une température dans les zones de mélange de l'extrudeuse dans la plage de 280° C à 350° C ; et dans laquelle la membrane a une épaisseur de paroi dans la plage de 5 à 150 μm.

**2.** Membrane selon la revendication 1, dans laquelle le polymère greffé comprend 50 à 99 % en poids, basé sur le poids total du copolymère greffé, dudit au moins un polysulfone ou polyéthersulfone, et 1 à 50 % en poids, basé sur le poids total du copolymère greffé, de ladite au moins une polyvinylpyrrolidone.

**3.** Membrane selon la revendication 1 ou 2, dans laquelle la membrane a une épaisseur de paroi dans la plage de 5 à 18 μm.

**4.** Procédé pour préparer une membrane à fibres creuses asymétrique semiperméable, comprenant les étapes consistant à

a) dissoudre un copolymère greffé d'au moins un polysulfone ou polyéthersulfone et d'au moins une polyvinylpyrrolidone, formé par mélange réactif d'au moins un polysulfone ou polyéthersulfone et d'au moins une polyvinylpyrrolidone dans une extrudeuse à une température dans les zones de mélange de l'extrudeuse dans la plage de 280 ° C à 350 ° C, dans au moins un solvant pour former une solution de copolymère greffé ;
b) extruder ladite solution de copolymère greffé via une fente annulaire extérieure d'une buse avec deux ouvertures concentriques vers un bain de précipitation ; simultanément
c) extruder un fluide central à travers l'ouverture intérieure de la buse ; et ensuite
d) laver la membrane obtenue ;
e) sécher ladite membrane et, en option, stériliser ladite membrane.

**5.** Procédé selon la revendication 4, dans lequel le copolymère greffé comprend 50 à 99 % en poids, sur la base du poids total du copolymère greffé, dudit au moins un polysulfone ou polyéthersulfone, et de 1 à 50 % en poids, sur la base du poids total du copolymère greffé, de ladite au moins une polyvinylpyrrolidone.

**6.** Procédé selon la revendication 4 ou 5, dans lequel la solution de copolymère greffé présente une viscosité dynamique, mesurée à 22° C, dans la plage de 100 à 20 000 mPa*s, déterminée en accord avec la norme DIN ISO 1628-1.

**7.** Procédé selon l'une quelconque des revendications 4 à 6, dans lequel la concentration de copolymère greffé dans la solution de copolymère est dans la plage de 25 à 35 % en poids.

**8.** Procédé selon l'une quelconque des revendications 4 à 7, dans lequel la buse de filature est tenue à une température dans la plage de 30 à 45° C.

**9.** Procédé selon l'une quelconque des revendications 4 à 8, dans lequel le copolymère greffé est préparé par mélange réactif d'au moins un polysulfone ou polyéthersulfone et d'au moins une polyvinylpyrrolidone dans un rapport pondéral de 50:50 à 95:5 dans une extrudeuse à une température de 280 à 350° C.

**10.** Procédé selon la revendication 9, dans lequel le produit obtenu par le processus de mélange réactif est en outre traité pour supprimer des matériaux de départ qui n'ont pas réagi et des sous-produits avant l'étape a).

**11.** Procédé selon la revendication 9, dans lequel le produit obtenu par le processus de mélange réactif est utilisé dans l'étape a) sans autre purification.

**12.** Dispositif de diffusion et/ou de filtration comprenant une membrane selon l'une quelconque des revendications 1 à 3.

**13.** Utilisation d'une membrane selon l'une quelconque des revendications 1 à 3, ou préparée selon l'une quelconque des revendications 4 à 11, dans des traitements biologiques, le fractionnement de plasma ou la préparation de solutions de protéines.

Fig. 1

Fig. 2

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0305787 A1
- EP 2113298 A1
- US 6113785 A
- EP 2365022 A1
- EP 2228126 A1
- EP 0844015 A2
- EP 0305687 A1
- WO 0160477 A2